# EUROPEAN PATENT APPLICATION

(11) **EP 4 366 410 A1**
(43) Date of publication of application: **08.05.2024**
(21) Application number: 22853421.0
(22) Date of filing: 02.08.2022
(51) Int. Cl.: H04W 72/02, H04W 72/04, H04W 72/12, H04W 28/26, H04W 92/18

(54) **METHOD AND APPARATUS FOR REQUESTING INTER-UE COORDINATION INFORMATION IN SIDELINK COMMUNICATION**

(30) Priority: 04.08.2021 KR 20210102794
(71) Applicant: HYUNDAI MOTOR COMPANY, Seoul 06797 (KR); Kia Corporation, Seocho-gu Seoul 06797 (KR); Wonkwang University Center for Industry - Academy Cooperation, Iksan-si, Jeollabuk-do 54538 (KR)
(72) Inventor: HONG, Ui Hyun, Hwaseong-si, Gyeonggi-do 18280 (KR); HAHN, Gene Back, Hwaseong-si, Gyeonggi-do 18280 (KR); SON, Hyuk Min, Seoul 05649 (KR)
(74) Representative: Isarpatent
(86) International application number: PCT/KR2022/011391
(87) International publication number: WO 2023/014044

(57) **Abstract**

Disclosed are a method and an apparatus for requesting inter-UE coordination information in sidelink communication. The method for first UE comprises the steps of: generating first SCI including a first information element for requesting inter-UE coordination information and a second information element for indicating the type of resource information included in the inter-UE coordination information; transmitting the first SCI to second UE; and receiving, from the second UE, second SCI including the inter-UE coordination information.

## Description

### [Technical Field]

The present disclosure relates to a sidelink communication technique, and more particularly, to a technique for requesting inter-user equipment (UE) coordination information.

### [Background Art]

A fifth-generation (5G) communication system (e.g. New Radio (NR) communication system) which uses a frequency band higher than a frequency band of a fourth-generation (4G) communication system (e.g. Long Term Evolution (LTE) communication system or LTE-Advanced (LTE-A) communication system) as well as the frequency band of the 4G communication system has been considered for processing of wireless data. The 5G communication system can support Enhanced Mobile Broadband (eMBB) communications, Ultra-Reliable and Low-Latency communications (URLLC), massive Machine Type Communications (mMTC), and the like.

The 4G communication system and 5G communication system can support Vehicle-to-Everything (V2X) communications. The V2X communications supported in a cellular communication system, such as the 4G communication system, the 5G communication system, and the like, may be referred to as "Cellular-V2X (C-V2X) communications." The V2X communications (e.g. C-V2X communications) may include Vehicle-to-Vehicle (V2V) communications, Vehicle-to-Infrastructure (V2I) communications, Vehicle-to-Pedestrian (V2P) communication, Vehicle-to-Network (V2N) communication, and the like.

In the cellular communication systems, the V2X communications (e.g. C-V2X communications) may be performed based on sidelink communication technologies (e.g. Proximity-based Services (ProSe) communication technology, Device-to-Device (D2D) communication technology, or the like). For example, sidelink channels for vehicles participating in V2V communications can be established, and communications between the vehicles can be performed using the sidelink channels. Sidelink communication may be performed using configured grant (CG) resources. The CG resources may be periodically configured, and periodic data (e.g. periodic sidelink data) may be transmitted using the CG resources.

Meanwhile, sidelink communication may be performed based on a resource allocation (RA) mode 1 or RA mode 2. When the RA mode 1 is used, a base station may allocate resources for sidelink communication to a user equipment (UE), and the UE may perform sidelink communication using the resources allocated by the base station. When the RA mode 2 is used, the UE may determine resources for sidelink communication by performing a resource sensing operation and/or a resource selection operation, and may perform sidelink communication using the determined resources.

Power consumption by performing the resource sensing operation and/or resource selection operation in the UE may be large. In a UE with limited power capacity, a UE with limited resource sensing capability, and/or a UE with limited resource selection capability, the resource sensing operation and/or resource selection operation may not be performed normally. Additionally, the efficiency of resource allocation according to the RA mode 2 may be reduced due to a hidden node problem, exposed node problem, and/or half-duplex problem. To solve the above-described problem, methods for performing the resource sensing operation and/or resource selection operation based on assistance of nearby UEs are needed.

### [Disclosure]

### [Technical Problem]

The present disclosure is directed to providing a method and an apparatus for requesting inter-UE coordination information in sidelink communication.

### [Technical Solution]

A method of a first user equipment (UE), according to a first exemplary embodiment of the present disclosure for achieving the above-described objective, may comprise: generating first sidelink control information (SCI) including a first information element requesting inter-UE coordination information and a second information element indicating a type of resource information included in the inter-UE coordination information; transmitting the first SCI to a second UE; and receiving second SCI including the inter-UE coordination information from the second UE.

When a request for the inter-UE coordination information is enabled by higher layer signaling, the first SCI including the first information element and the second information element may be transmitted.

The type may indicate preferred resources or non-preferred resources, and the inter-UE coordination information of the second SCI may include preferred resource information or non-preferred resource information corresponding to the type.

The first SCI may further include time resource information, and preferred resources or non-preferred resources indicated by the inter-UE coordination information of the second SCI may be determined within a time resource indicated by the time resource information.

The first SCI may further include frequency resource information, and preferred resources or non-preferred resources indicated by the inter-UE coordination information of the second SCI may be determined within a frequency resource indicated by the frequency resource information.

Preferred resources or non-preferred resources indicated by the inter-UE coordination information of the second SCI may be determined within a resource pool.

The first SCI may be configured by higher layer signaling to include the first information element requesting the inter-UE coordination information.

Each of the first SCI and the second SCI may be an SCI format 2-C.

A method of a second UE, according to a second exemplary embodiment of the present disclosure for achieving the above-described objective, may comprise: receiving, from a first UE, first sidelink control information (SCI) including a first information element requesting inter-UE coordination information and a second information element indicating a type of resource information included in the inter-UE coordination information; determining the resource information corresponding to the type based on the request of the first information element; and transmitting second SCI including the inter-UE coordination information including the resource information to the second UE.

When a request for the inter-UE coordination information is enabled by higher layer signaling, the first SCI including the first information element and the second information element may be received from the first UE.

The type may indicate preferred resources or non-preferred resources, and the resource information included in the inter-UE coordination information of the second SCI may be preferred resource information or non-preferred resource information.

The first SCI may further include time resource information, and preferred resources or non-preferred resources indicated by the resource information included in the inter-UE coordination information of the second SCI may be determined within a time resource indicated by the time resource information.

The first SCI may further include frequency resource information, and preferred resources or non-preferred resources indicated by the inter-UE coordination information of the second SCI may be determined within a frequency resource indicated by the frequency resource information.

Preferred resources or non-preferred resources indicated by the inter-UE coordination information of the second SCI may be determined within a resource pool.

The first SCI may be configured by higher layer signaling to include the first information element requesting the inter-UE coordination information.

A first UE, according to a third exemplary embodiment of the present disclosure for achieving the above-described objective, may comprise: a processor; and a memory storing one or more instructions executable by the processor, and the one or more instructions may be executed to perform: generating first sidelink control information (SCI) including a first information element requesting inter-UE coordination information and a second information element indicating a type of resource information included in the inter-UE coordination information; transmitting the first SCI to a second UE; and receiving second SCI including the inter-UE coordination information from the second UE.

When a request for the inter-UE coordination information is enabled by higher layer signaling, the first SCI including the first information element and the second information element may be transmitted.

The type may indicate preferred resources or non-preferred resources, and the inter-UE coordination information of the second SCI may include preferred resource information or non-preferred resource information corresponding to the type.

The first SCI may further include time resource information, and preferred resources or non-preferred resources indicated by the inter-UE coordination information of the second SCI may be determined within a time resource indicated by the time resource information.

The first SCI may further include frequency resource information, and preferred resources or non-preferred resources indicated by the inter-UE coordination information of the second SCI may be determined within a frequency resource indicated by the frequency resource information.

### [Advantageous Effects]

According to the present disclosure, a UE-B may transmit sidelink control information (SCI) requesting inter-UE coordination information to a UE-A. The UE-A may determine preferred resources or non-preferred resources at the request of the UE-B, and transmit SCI comprising inter-UE coordination information including preferred resource information or non-preferred resource information to the UE-B. The UE-B may receive the inter-UE coordination information from the UE-A and perform sidelink communication (e.g. resource sensing operation and/or resource selection operation) based on the inter-UE coordination information.

### [Description of Drawings]

FIG. 1 is a conceptual diagram illustrating V2X communication scenarios.
FIG. 2 is a conceptual diagram illustrating an exemplary embodiment of a cellular communication system.
FIG. 3 is a conceptual diagram illustrating an exemplary embodiment of a communication node constituting a cellular communication system.
FIG. 4 is a block diagram illustrating an exemplary embodiment of a user plane protocol stack of a UE performing sidelink communication.
FIG. 5 is a block diagram illustrating a first exemplary embodiment of a control plane protocol stack of a UE performing sidelink communication.
FIG. 6 is a block diagram illustrating a second exemplary embodiment of a control plane protocol stack of a UE performing sidelink communication.
FIG. 7 is a sequence chart illustrating a first exemplary embodiment of a sidelink communication method.
FIG. 8 is a sequence chart illustrating a second exemplary embodiment of a sidelink communication method.
FIG. 9 is a sequence chart illustrating a third exemplary embodiment of a sidelink communication method.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

In exemplary embodiments of the present disclosure, '(re)transmission' may refer to 'transmission', 'retransmission', or 'transmission and retransmission', '(re)configuration' may refer to 'configuration', `reconfiguration', or 'configuration and reconfiguration', '(re)connection' may refer to 'connection', 'reconnection', or 'connection and reconnection', and '(re)access' may refer to 'access', 're-access', or 'access and re-access'.

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

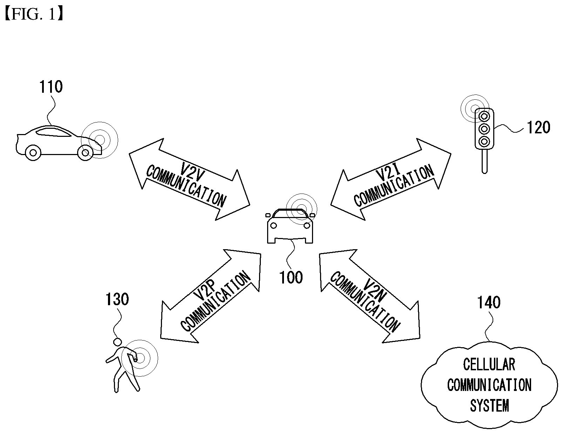

FIG. 1 is a conceptual diagram illustrating V2X communication scenarios.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g. a cellular communication system 140), and the V2X communications supported by the cellular communication system 140 may be referred to as "Cellular-V2X (C-V2X) communications." Here, the cellular communication system 140 may include the 4G communication system (e.g. LTE communication system or LTE-A communication system), 5G communication system (e.g. NR communication system), and the like.

As shown in FIG. 1, the V2X communications may include Vehicle-to-Vehicle (V2V) communications, Vehicle-to-Infrastructure (V2I) communications, Vehicle-to-Pedestrian (V2P) communications, Vehicle-to-Network (V2N) communications, and the like. The V2X communications may be supported by a cellular communication system (e.g. a cellular communication system 140), and the V2X communications supported by the cellular communication system 140 may be referred to as "Cellular-V2X (C-V2X) communications." Here, the cellular communication system 140 may include the 4G communication system (e.g. LTE communication system or LTE-A communication system), 5G communication system (e.g. NR communication system), 6G communication system, and the like.

The V2V communications may include communications between a first vehicle 100 (e.g. a communication node located in the vehicle 100) and a second vehicle 110 (e.g. a communication node located in the vehicle 110). Various driving information such as velocity, heading, time, position, and the like may be exchanged between the vehicles 100 and 110 through the V2V communications. For example, autonomous driving (e.g. platooning) may be supported based on the driving information exchanged through the V2V communications. The V2V communications supported in the cellular communication system 140 may be performed based on "sidelink" communication technologies (e.g. ProSe and D2D communication technologies, and the like). In this case, the communications between the vehicles 100 and 110 may be performed using at least one sidelink channel established between the vehicles 100 and 110.

The V2I communications may include communications between the first vehicle 100 (e.g. the communication node located in the vehicle 100) and an infrastructure (e.g. road side unit (RSU)) 120 located on a roadside. The infrastructure 120 may also include a traffic light or a street light which is located on the roadside. For example, when the V2I communications are performed, the communications may be performed between the communication node located in the first vehicle 100 and a communication node located in a traffic light. Traffic information, driving information, and the like may be exchanged between the first vehicle 100 and the infrastructure 120 through the V2I communications. The V2I communications supported in the cellular communication system 140 may also be performed based on sidelink communication technologies (e.g. ProSe and D2D communication technologies, and the like). In this case, the communications between the vehicle 100 and the infrastructure 120 may be performed using at least one sidelink channel established between the vehicle 100 and the infrastructure 120.

The V2P communications may include communications between the first vehicle 100 (e.g. the communication node located in the vehicle 100) and a person 130 (e.g. a communication node carried by the person 130). The driving information of the first vehicle 100 and movement information of the person 130 such as velocity, heading, time, position, and the like may be exchanged between the vehicle 100 and the person 130 through the V2P communications. The communication node located in the vehicle 100 or the communication node carried by the person 130 may generate an alarm indicating a danger by judging a dangerous situation based on the obtained driving information and movement information. The V2P communications supported in the cellular communication system 140 may be performed based on sidelink communication technologies (e.g. ProSe and D2D communication technologies, and the like). In this case, the communications between the communication node located in the vehicle 100 and the communication node carried by the person 130 may be performed using at least one sidelink channel established between the communication nodes.

The V2N communications may be communications between the first vehicle 100 (e.g. the communication node located in the vehicle 100) and a server connected through the cellular communication system 140. The V2N communications may be performed based on the 4G communication technology (e.g. LTE or LTE-A) or the 5G communication technology (e.g. NR). Also, the V2N communications may be performed based on a Wireless Access in Vehicular Environments (WAVE) communication technology or a Wireless Local Area Network (WLAN) communication technology which is defined in Institute of Electrical and Electronics Engineers (IEEE) 802.11, or a Wireless Personal Area Network (WPAN) communication technology defined in IEEE 802.15.

Meanwhile, the cellular communication system 140 supporting the V2X communications may be configured as follows.

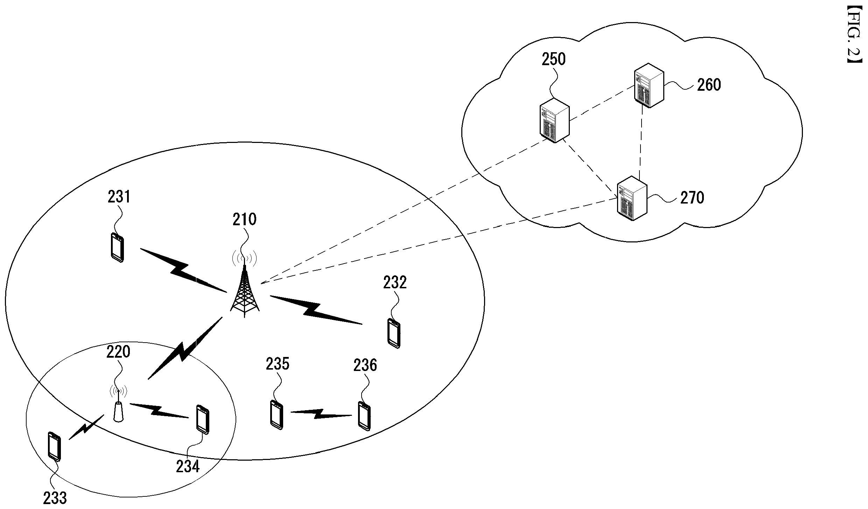

FIG. 2 is a conceptual diagram illustrating an exemplary embodiment of a cellular communication system.

As shown in FIG. 2, a cellular communication system may include an access network, a core network, and the like. The access network may include a base station 210, a relay 220, User Equipments (UEs) 231 through 236, and the like. The UEs 231 through 236 may include communication nodes located in the vehicles 100 and 110 of FIG. 1, the communication node located in the infrastructure 120 of FIG. 1, the communication node carried by the person 130 of FIG. 1, and the like. When the cellular communication system supports the 4G communication technology, the core network may include a serving gateway (S-GW) 250, a packet data network (PDN) gateway (P-GW) 260, a mobility management entity (MME) 270, and the like.

When the cellular communication system supports the 5G communication technology, the core network may include a user plane function (UPF) 250, a session management function (SMF) 260, an access and mobility management function (AMF) 270, and the like. Alternatively, when the cellular communication system operates in a Non-Stand Alone (NSA) mode, the core network constituted by the S-GW 250, the P-GW 260, and the MME 270 may support the 5G communication technology as well as the 4G communication technology, and the core network constituted by the UPF 250, the SMF 260, and the AMF 270 may support the 4G communication technology as well as the 5G communication technology.

In addition, when the cellular communication system supports a network slicing technique, the core network may be divided into a plurality of logical network slices. For example, a network slice supporting V2X communications (e.g. a V2V network slice, a V2I network slice, a V2P network slice, a V2N network slice, etc.) may be configured, and the V2X communications may be supported through the V2X network slice configured in the core network.

The communication nodes (e.g. base station, relay, UE, S-GW, P-GW, MME, UPF, SMF, AMF, etc.) comprising the cellular communication system may perform communications by using at least one communication technology among a code division multiple access (CDMA) technology, a time division multiple access (TDMA) technology, a frequency division multiple access (FDMA) technology, an orthogonal frequency division multiplexing (OFDM) technology, a filtered OFDM technology, an orthogonal frequency division multiple access (OFDMA) technology, a single carrier FDMA (SC-FDMA) technology, a non-orthogonal multiple access (NOMA) technology, a generalized frequency division multiplexing (GFDM) technology, a filter bank multi-carrier (FBMC) technology, a universal filtered multi-carrier (UFMC) technology, and a space division multiple access (SDMA) technology.

The communication nodes (e.g. base station, relay, UE, S-GW, P-GW, MME, UPF, SMF, AMF, etc.) comprising the cellular communication system may be configured as follows.

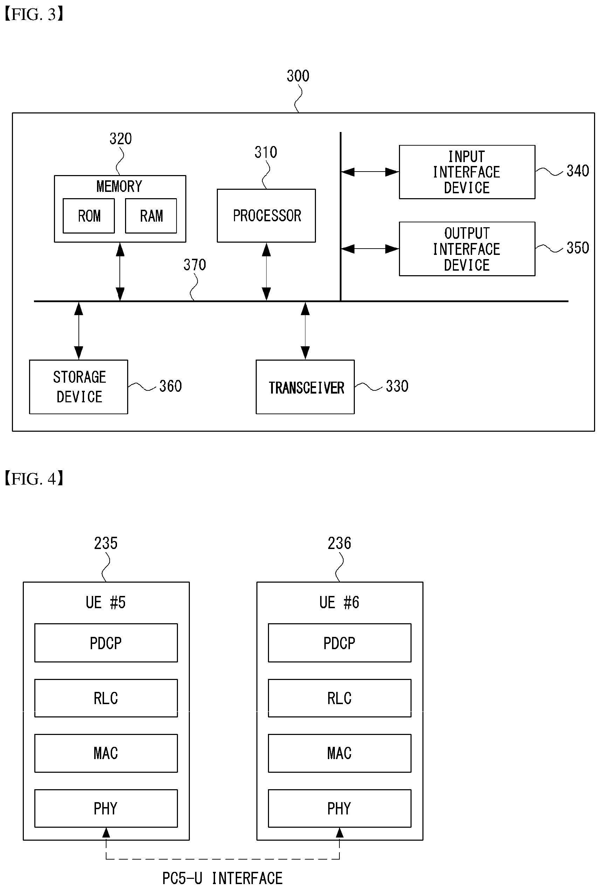

FIG. 3 is a conceptual diagram illustrating an exemplary embodiment of a communication node constituting a cellular communication system.

As shown in FIG. 3, a communication node 300 may comprise at least one processor 310, a memory 320, and a transceiver 330 connected to a network for performing communications. Also, the communication node 300 may further comprise an input interface device 340, an output interface device 350, a storage device 360, and the like. Each component included in the communication node 300 may communicate with each other as connected through a bus 370.

However, each of the components included in the communication node 300 may be connected to the processor 310 via a separate interface or a separate bus rather than the common bus 370. For example, the processor 310 may be connected to at least one of the memory 320, the transceiver 330, the input interface device 340, the output interface device 350, and the storage device 360 via a dedicated interface.

The processor 310 may execute at least one instruction stored in at least one of the memory 320 and the storage device 360. The processor 310 may refer to a central processing unit (CPU), a graphics processing unit (GPU), or a dedicated processor on which methods in accordance with embodiments of the present disclosure are performed. Each of the memory 320 and the storage device 360 may include at least one of a volatile storage medium and a nonvolatile storage medium. For example, the memory 320 may comprise at least one of read-only memory (ROM) and random access memory (RAM).

Referring again to FIG. 2, in the communication system, the base station 210 may form a macro cell or a small cell, and may be connected to the core network via an ideal backhaul or a non-ideal backhaul. The base station 210 may transmit signals received from the core network to the UEs 231 through 236 and the relay 220, and may transmit signals received from the UEs 231 through 236 and the relay 220 to the core network. The UEs 231, 232, 234, 235 and 236 may belong to cell coverage of the base station 210. The UEs 231, 232, 234, 235 and 236 may be connected to the base station 210 by performing a connection establishment procedure with the base station 210. The UEs 231, 232, 234, 235 and 236 may communicate with the base station 210 after being connected to the base station 210.

The relay 220 may be connected to the base station 210 and may relay communications between the base station 210 and the UEs 233 and 234. That is, the relay 220 may transmit signals received from the base station 210 to the UEs 233 and 234, and may transmit signals received from the UEs 233 and 234 to the base station 210. The UE 234 may belong to both of the cell coverage of the base station 210 and the cell coverage of the relay 220, and the UE 233 may belong to the cell coverage of the relay 220. That is, the UE 233 may be located outside the cell coverage of the base station 210. The UEs 233 and 234 may be connected to the relay 220 by performing a connection establishment procedure with the relay 220. The UEs 233 and 234 may communicate with the relay 220 after being connected to the relay 220.

The base station 210 and the relay 220 may support multiple-input, multiple-output (MIMO) technologies (e.g. single user (SU)-MIMO, multi-user (MU)-MIMO, massive MIMO, etc.), coordinated multipoint (CoMP) communication technologies, carrier aggregation (CA) communication technologies, unlicensed band communication technologies (e.g. Licensed Assisted Access (LAA), enhanced LAA (eLAA), etc.), sidelink communication technologies (e.g. ProSe communication technology, D2D communication technology), or the like. The UEs 231, 232, 235 and 236 may perform operations corresponding to the base station 210 and operations supported by the base station 210. The UEs 233 and 234 may perform operations corresponding to the relays 220 and operations supported by the relays 220.

Here, the base station 210 may be referred to as a Node B (NB), an evolved Node B (eNB), a base transceiver station (BTS), a radio remote head (RRH), a transmission reception point (TRP), a radio unit (RU), a roadside unit (RSU), a radio transceiver, an access point, an access node, or the like. The relay 220 may be referred to as a small base station, a relay node, or the like. Each of the UEs 231 through 236 may be referred to as a terminal, an access terminal, a mobile terminal, a station, a subscriber station, a mobile station, a portable subscriber station, a node, a device, an on-broad unit (OBU), or the like.

Meanwhile, the communications between the UEs 235 and 236 may be performed based on the sidelink communication technique. The sidelink communications may be performed based on a one-to-one scheme or a one-to-many scheme. When V2V communications are performed using the sidelink communication technique, the UE 235 may be the communication node located in the first vehicle 100 of FIG. 1 and the UE 236 may be the communication node located in the second vehicle 110 of FIG. 1. When V2I communications are performed using the sidelink communication technique, the UE 235 may be the communication node located in first vehicle 100 of FIG. 1 and the UE 236 may be the communication node located in the infrastructure 120 of FIG. 1. When V2P communications are performed using the sidelink communication technique, the UE 235 may be the communication node located in first vehicle 100 of FIG. 1 and the UE 236 may be the communication node carried by the person 130 of FIG. 1.

The scenarios to which the sidelink communications are applied may be classified as shown below in Table 1 according to the positions of the UEs (e.g. the UEs 235 and 236) participating in the sidelink communications. For example, the scenario for the sidelink communications between the UEs 235 and 236 shown in FIG. 2 may be a sidelink communication scenario C.

**[Table 1]**

| **Sidelink Communication Scenario** | **Position of UE 235** | **Position of UE 236** |
|---|---|---|
| A | Out of coverage of base station 210 | Out of coverage of base station 210 |
| B | In coverage of base station 210 | Out of coverage of base station 210 |
| C | In coverage of base station 210 | In coverage of base station 210 |
| D | In coverage of base station 210 | In coverage of other base station |

Meanwhile, a user plane protocol stack of the UEs (e.g. the UEs 235 and 236) performing sidelink communications may be configured as follows.

FIG. 4 is a block diagram illustrating an exemplary embodiment of a user plane protocol stack of a UE performing sidelink communication.

As shown in FIG. 4, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The user plane protocol stack of each of the UEs 235 and 236 may comprise a physical (PHY) layer, a medium access control (MAC) layer, a radio link control (RLC) layer, and a packet data convergence protocol (PDCP) layer.

The sidelink communications between the UEs 235 and 236 may be performed using a PC5 interface (e.g. PC5-U interface). A layer-2 identifier (ID) (e.g. a source layer-2 ID, a destination layer-2 ID) may be used for the sidelink communications, and the layer 2-ID may be an ID configured for the V2X communications (e.g. V2X service). Also, in the sidelink communications, a hybrid automatic repeat request (HARQ) feedback operation may be supported, and an RLC acknowledged mode (RLC AM) or an RLC unacknowledged mode (RLC UM) may be supported.

Meanwhile, a control plane protocol stack of the UEs (e.g. the UEs 235 and 236) performing sidelink communications may be configured as follows.

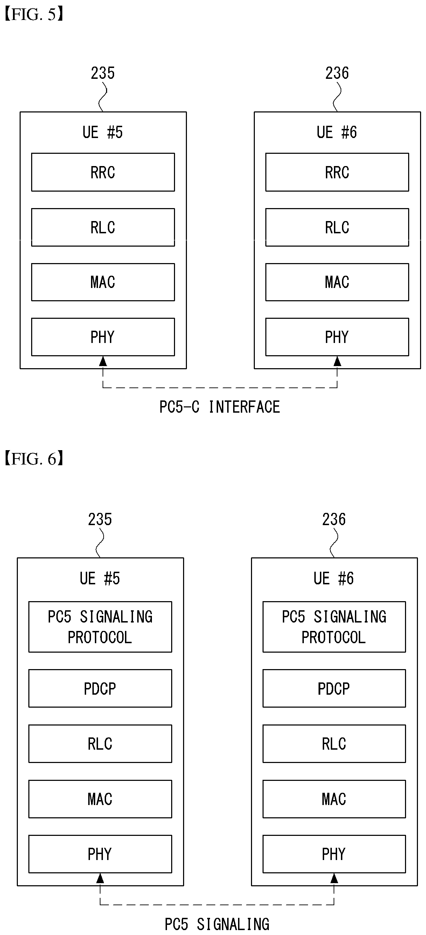

FIG. 5 is a block diagram illustrating a first exemplary embodiment of a control plane protocol stack of a UE performing sidelink communication, and FIG. 6 is a block diagram illustrating a second exemplary embodiment of a control plane protocol stack of a UE performing sidelink communication.

As shown in FIGS. 5 and 6, a left UE may be the UE 235 shown in FIG. 2 and a right UE may be the UE 236 shown in FIG. 2. The scenario for the sidelink communications between the UEs 235 and 236 may be one of the sidelink communication scenarios A through D of Table 1. The control plane protocol stack illustrated in FIG. 5 may be a control plane protocol stack for transmission and reception of broadcast information (e.g. Physical Sidelink Broadcast Channel (PSBCH)).

The control plane protocol stack shown in FIG. 5 may include a PHY layer, a MAC layer, an RLC layer, and a radio resource control (RRC) layer. The sidelink communications between the UEs 235 and 236 may be performed using a PC5 interface (e.g. PC5-C interface). The control plane protocol stack shown in FIG. 6 may be a control plane protocol stack for one-to-one sidelink communication. The control plane protocol stack shown in FIG. 6 may include a PHY layer, a MAC layer, an RLC layer, a PDCP layer, and a PC5 signaling protocol layer.

Meanwhile, channels used in the sidelink communications between the UEs 235 and 236 may include a Physical Sidelink Shared Channel (PSSCH), a Physical Sidelink Control Channel (PSCCH), a Physical Sidelink Discovery Channel (PSDCH), and a Physical Sidelink Broadcast Channel (PSBCH). The PSSCH may be used for transmitting and receiving sidelink data and may be configured in the UE (e.g. UE 235 or 236) by a higher layer signaling. The PSCCH may be used for transmitting and receiving sidelink control information (SCI) and may also be configured in the UE (e.g. UE 235 or 236) by a higher layer signaling.

The PSDCH may be used for a discovery procedure. For example, a discovery signal may be transmitted over the PSDCH. The PSBCH may be used for transmitting and receiving broadcast information (e.g. system information). Also, a demodulation reference signal (DM-RS), a synchronization signal, or the like may be used in the sidelink communications between the UEs 235 and 236. The synchronization signal may include a primary sidelink synchronization signal (PSSS) and a secondary sidelink synchronization signal (SSSS).

Meanwhile, a sidelink transmission mode (TM) may be classified into sidelink TMs 1 to 4 as shown below in Table 2.

**[Table 2]**

| **Sidelink TM** | **Description** |
|---|---|
| 1 | Transmission using resources scheduled by base station |
| 2 | UE autonomous transmission without scheduling of base station |
| 3 | Transmission using resources scheduled by base station in V2X communications |
| 4 | UE autonomous transmission without scheduling of base station in V2X communications |

When the sidelink TM 3 or 4 is supported, each of the UEs 235 and 236 may perform sidelink communications using a resource pool configured by the base station 210. The resource pool may be configured for each of the sidelink control information and the sidelink data.

The resource pool for the sidelink control information may be configured based on an RRC signaling procedure (e.g. a dedicated RRC signaling procedure, a broadcast RRC signaling procedure). The resource pool used for reception of the sidelink control information may be configured by a broadcast RRC signaling procedure. When the sidelink TM 3 is supported, the resource pool used for transmission of the sidelink control information may be configured by a dedicated RRC signaling procedure. In this case, the sidelink control information may be transmitted through resources scheduled by the base station 210 within the resource pool configured by the dedicated RRC signaling procedure. When the sidelink TM 4 is supported, the resource pool used for transmission of the sidelink control information may be configured by a dedicated RRC signaling procedure or a broadcast RRC signaling procedure. In this case, the sidelink control information may be transmitted through resources selected autonomously by the UE (e.g. UE 235 or 236) within the resource pool configured by the dedicated RRC signaling procedure or the broadcast RRC signaling procedure.

When the sidelink TM 3 is supported, the resource pool for transmitting and receiving sidelink data may not be configured. In this case, the sidelink data may be transmitted and received through resources scheduled by the base station 210. When the sidelink TM 4 is supported, the resource pool for transmitting and receiving sidelink data may be configured by a dedicated RRC signaling procedure or a broadcast RRC signaling procedure. In this case, the sidelink data may be transmitted and received through resources selected autonomously by the UE (e.g. UE 235 or 236) within the resource pool configured by the dedicated RRC signaling procedure or the broadcast RRC signaling procedure.

Hereinafter, sidelink communication methods will be described. Even when a method (e.g. transmission or reception of a signal) to be performed at a first communication node among communication nodes is described, a corresponding second communication node may perform a method (e.g. reception or transmission of the signal) corresponding to the method performed at the first communication node. That is, when an operation of a UE #1 (e.g. vehicle #1) is described, a UE #2 (e.g. vehicle #2) corresponding thereto may perform an operation corresponding to the operation of the UE #1. Conversely, when an operation of the UE #2 is described, the corresponding UE #1 may perform an operation corresponding to the operation of the UE #2. In exemplary embodiments described below, an operation of a vehicle may be an operation of a communication node located in the vehicle.

In exemplary embodiments, signaling may be one or a combination of two or more of higher layer signaling, MAC signaling, and physical (PHY) signaling. A message used for higher layer signaling may be referred to as a 'higher layer message' or 'higher layer signaling message'. A message used for MAC signaling may be referred to as a 'MAC message' or 'MAC signaling message'. A message used for PHY signaling may be referred to as a 'PHY message' or 'PHY signaling message'. The higher layer signaling may refer to an operation of transmitting and receiving system information (e.g. master information block (MIB), system information block (SIB)) and/or an RRC message. The MAC signaling may refer to an operation of transmitting and receiving a MAC control element (CE). The PHY signaling may refer to an operation of transmitting and receiving control information (e.g. downlink control information (DCI), uplink control information (UCI), or SCI).

A sidelink signal may be a synchronization signal and a reference signal used for sidelink communication. For example, the synchronization signal may be a synchronization signal/physical broadcast channel (SS/PBCH) block, sidelink synchronization signal (SLSS), primary sidelink synchronization signal (PSSS), secondary sidelink synchronization signal (SSSS), or the like. The reference signal may be a channel state information-reference signal (CSI-RS), DM-RS, phase tracking-reference signal (PT-RS), cell-specific reference signal (CRS), sounding reference signal (SRS), discovery reference signal (DRS), or the like.

A sidelink channel may be a PSSCH, PSCCH, PSDCH, PSBCH, physical sidelink feedback channel (PSFCH), or the like. In addition, a sidelink channel may refer to a sidelink channel including a sidelink signal mapped to specific resources in the corresponding sidelink channel. The sidelink communication may support a broadcast service, a multicast service, a groupcast service, and a unicast service.

The sidelink communication may be performed based on a single-SCI scheme or a multi-SCI scheme. When the single-SCI scheme is used, data transmission (e.g. sidelink data transmission, sidelink-shared channel (SL-SCH) transmission) may be performed based on one SCI (e.g. 1st-stage SCI). When the multi-SCI scheme is used, data transmission may be performed using two SCIs (e.g. 1st-stage SCI and 2nd-stage SCI). The SCI(s) may be transmitted on a PSCCH and/or a PSSCH. When the single-SCI scheme is used, the SCI (e.g. 1st-stage SCI) may be transmitted on a PSCCH. When the multi-SCI scheme is used, the 1st-stage SCI may be transmitted on a PSCCH, and the 2nd-stage SCI may be transmitted on the PSCCH or a PSSCH. The 1st-stage SCI may be referred to as 'first-stage SCI', and the 2nd-stage SCI may be referred to as 'second-stage SCI'. A format of the first-stage SCI may include a SCI format 1-A, and a format of the second-stage SCI may include a SCI format 2-A, a SCI format 2-B, and a SCI format 2-C.

The 1st-stage SCI may include or more information elements among priority information, frequency resource assignment information, time resource assignment information, resource reservation period information, demodulation reference signal (DMRS) pattern information, 2nd-stage SCI format information, a beta_offset indicator, the number of DMRS ports, and modulation and coding scheme (MCS) information. The 2nd-stage SCI may include one or more information elements among a HARQ processor identifier (ID), a redundancy version (RV), a source ID, a destination ID, CSI request information, a zone ID, and communication range requirements. The SCI format 2-C may be used for decoding of a PSSCH and/or providing inter-UE coordination information.

In exemplary embodiments, configuration of an operation (e.g. transmission operation) may mean that configuration information (e.g. information element(s), parameter(s)) for the operation and/or information indicating to perform the operation is signaled. Configuration of information element(s) (e.g. parameter(s)) may mean that the information element(s) are signaled. The signaling may be at least one of system information (SI) signaling (e.g. transmission of a system information block (SIB) and/or master information block (MIB)), RRC signaling (e.g. transmission of RRC parameters and/or higher layer parameters), MAC control element (CE) signaling, or PHY signaling (e.g. transmission of downlink control information (DCI), uplink control information (UCI), and/or sidelink control information (SCI)). Here, the MAC CE signaling operation may be performed through a data channel, the PHY signaling operation may be performed through a control channel or a data channel, and transmission of SCI may mean transmission of first-stage SCI and/or second-stage SCI.

In exemplary embodiments, a UE-A may refer to a UE that transmits inter-UE coordination information to a UE-B. The UE-A may be referred to as a first UE or a second UE. The UE-A may transmit inter-UE coordination information to the UE-B according to an explicit request of the UE-B. Alternatively, the UE-A may transmit inter-UE coordination information to the UE-B when a condition(s) configured by higher layer signaling is satisfied. The UE-B may refer to a UE that receives inter-UE coordination information from the UE-A. The UE-B may be referred to as a first UE or a second UE. If a request procedure for inter-UE coordination information is enabled, the UE-B may transmit a request for inter-UE coordination information to the UE-A. If a request procedure for inter-UE coordination information is not enabled, the UE-B may receive inter-UE coordination information the from UE-A without requesting the inter-UE coordination information. That is, if a preconfigured condition(s) is satisfied in the UE-A, the UE-B may receive inter-UE coordination information from the UE-A.

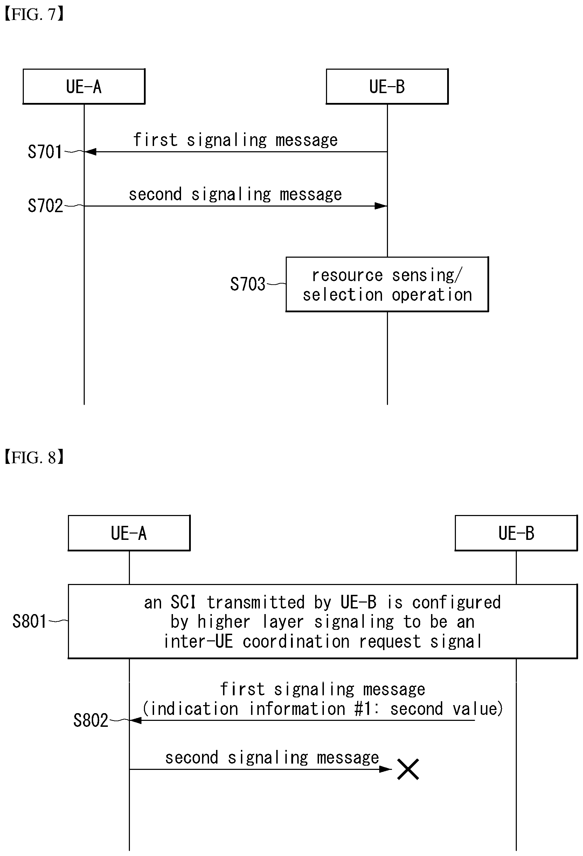

FIG. 7 is a sequence chart illustrating a first exemplary embodiment of a sidelink communication method.

As shown in FIG. 7, a communication system may include a UE-A and UE-B, and sidelink communication may be performed based on the resource allocation (RA) mode 2. The RA mode 2 may be the sidelink TM 2 or 4 specified in Table 2. The UE-A may transmit information helpful for resource selection (e.g. inter-UE coordination information) to the UE-B. The UE-B may perform a resource sensing operation and/or resource selection operation for sidelink communication. The UE-B may perform the resource sensing and/or resource selection operation based on the inter-UE coordination information received from the UE-A.

Although FIG. 7 illustrates sidelink communication between one UE-A and one UE-B, the exemplary embodiment of FIG. 7 may be applied to sidelink communication between a plurality of UE-As (e.g. a UE-A group including one or more UE-As) and one UE-B, sidelink communication between a plurality of UE-Bs (e.g. a UE-B group including one or more UE-Bs) and one UE-A, and/or sidelink communication between a plurality of UE-As (e.g. UE-A group) and a plurality of UE-Bs (e.g. UE-B group). In sidelink communication between a plurality of UE-As and one UE-B, one UE-B may transmit a plurality of first signaling messages to the plurality of UE-As, and may receive a second signaling message from each of the plurality of UE-As. In sidelink communication between one UE-A and a plurality of UE-Bs, one UE-A may receive a first signaling message from each of the plurality of UE-Bs, and transmit a second signaling message to each of the plurality of UE-Bs.

The UE-B may generate the first signaling message, which is a signal requesting provision of inter-UE coordination information, and transmit the first signaling message to the UE-A (S701). The step S701 may be performed when an explicit request procedure for inter-UE coordination information is enabled by higher layer signaling. The first signaling message may be a first-stage SCI and/or a second-stage SCI (e.g. SCI format 2-C). The first signaling message may be transmitted on a PSCCH and/or PSSCH. The first signaling message (e.g. first-stage SCI and/or second-stage SCI) may include a providing/requesting indicator indicating provision of or request for inter-UE coordination information. The size of the providing/requesting indicator may be 1 bit.

The providing/requesting indicator set to '0' may indicate that the corresponding SCI (e.g. SCI format 2-C) is used to provide inter-UE coordination information. The providing/requesting indicator set to '1' may indicate that the corresponding SCI (e.g. SCI format 2-C) is used to request inter-UE coordination information. In the step S701, the providing/requesting indicator included in the first signaling message may be set to 1, and in the step S702, the providing/requesting indicator included in the second signaling message may be set to 0. A reserved bit(s) in the first signaling message (e.g. first-stage SCI or second-stage SCI) may be used to express the providing/requesting indicator. Alternatively, a new first-stage SCI and/or a new second-stage SCI may be defined to request provision of inter-UE coordination information.

In addition, the first signaling message may further include a resource set type (e.g. type of resource information). The size of the resource set type may be 1 bit. The resource set type set to 0 may indicate a preferred resource set. In this case, the first signaling message may request provision of preferred resource set information (e.g. preferred resource information). The resource set type set to 1 may indicate a non-preferred resource set. In this case, the first signaling message may request provision of non-preferred resource set information (e.g. non-preferred resource information). According to a combination of the providing/requesting indicator and the resource set type included in the first signaling message, a request for inter-UE coordination information indicating a preferred resource set or a request for inter-UE coordination information indicating a non-preferred resource set may be indicated. In exemplary embodiments, a preferred resource set and preferred resources may be used with the same meaning, and a non-preferred resource set and non-preferred resources may be used with the same meaning.

The UE-A may receive the first signaling message (e.g. SCI format 2-C) from the UE-B and identify the providing/requesting indicator included in the first signaling message. If the providing/requesting indicator indicates a request for inter-UE coordination information, the UE-A may transmit a second signaling message including inter-UE coordination information to the UE-B (S702). The step S702 may be performed based on the UE-B's request for inter-UE coordination information. Alternatively, if an explicit request procedure for inter-UE coordination information is not enabled by higher layer signaling, the UE-A may transmit inter-UE coordination information to the UE-B without the UE-B's request for inter-UE coordination information. In this case, the UE-A may transmit inter-UE coordination information to the UE-B when a condition(s) configured by higher layer signaling is satisfied.

If the resource set type included in the first signaling message indicates a preferred resource set, the UE-A may determine a preferred resource set (e.g. preferred resources), and may generate inter-UE coordination information including information element(s) indicating the preferred resource set. The preferred resource set may be determined within a resource region (e.g. time resource, frequency resource, resource pool). The resource region within which the preferred resource set is determined may be configured to the UE(s) by higher layer signaling of the base station. Alternatively, information element(s) indicating the resource region within which the preferred resource set is determined may be included in the UE-B's first signaling message (e.g. SCI format 2-C). The time resource may be a resource reservation period. The frequency resource may be one or more subchannels.

If the resource set type included in the first signaling message indicates a non-preferred resource set, the UE-A may determine a non-preferred resource set (e.g. non-preferred resources), and may generate inter-UE coordination information including information element(s) indicating the non-preferred resource set. The non-preferred resource set may be determined within a resource region (e.g. time resource, frequency resource, resource pool). The resource region within which the non-preferred resource set is determined may be configured to the UE(s) by higher layer signaling of the base station. Alternatively, information element(s) indicating the resource region within which the non-preferred resource set is determined may be included in the UE-B's first signaling message (e.g. SCI format 2-C). The time resource may be a resource reservation section. The frequency resource may be one or more subchannels.

The second signaling message may include inter-UE coordination information including information element(s) indicating a preferred resource set or a non-preferred resource set. The second signaling message may be a first-stage SCI and/or a second-stage SCI (e.g. SCI format 2-C). The second signaling message may include the providing/requesting indicator indicating provision of inter-UE coordination information and the resource set type.

The UE-B may receive the second signaling message from the UE-A and identify the inter-UE coordination information included in the second signaling message. For example, if the providing/requesting indicator included in the second signaling message indicates provision of inter-UE coordination information, the UE-B may perform a decoding operation to obtain the inter-UE coordination information from the second signaling message. If the resource set type included in the second signaling message indicates a preferred resource set, the UE-B may determine that the inter-UE coordination information obtained from the second signaling message indicates a preferred resource type. If the resource set type included in the second signaling message indicates a non-preferred resource set, the UE-B may determine that the inter-UE coordination information obtained from the second signaling message indicates a non-preferred resource type. The UE-B may perform a resource sensing/selection operation by considering the inter-UE coordination information (S703). In exemplary embodiments, the resource sensing/selection operation may include a resource sensing operation and/or a resource selection operation.

The inter-UE coordination information may include information element(s) indicating a preferred resource set and/or a non-preferred resource set. The UE-B may select resource(s) within the preferred resource set by performing a resource sensing/selection operation, and perform sidelink communication using the selected resource(s). Alternatively, the UE-B may select resource(s) other than the non-preferred resource set by performing a resource sensing/selection operation, and perform sidelink communication using the selected resource(s).

The above-described first signaling message may include at least one of resource pool (RP) information, time resource information, or frequency resource information. The RP information may indicate a Tx RP allocated to the UE-B. The Tx RP of the UE-B may be configured by the base station. The time resource information may indicate a time resource sensed by the UE-B or a time resource reserved by the UE-B for data transmission. The time resource indicated by the time resource information may be a time resource within the Tx RP allocated to the UE-B. The UE-A can determine a preferred resource or non-preferred resource within the time resource indicated by the time resource information. The time resource information may indicate a resource reservation period.

The frequency resource information may indicate a frequency resource sensed by the UE-B or a frequency resource reserved by the UE-B for data transmission. The frequency resource indicated by the frequency resource information may be a frequency resource within the Tx RP allocated to the UE-B. The UE-B may determine a preferred resource or non-preferred resource within the frequency resource indicated by the frequency resource information. The frequency resource may be configured on a subchannel basis, and the frequency resource information may indicate the number of subchannels.

The first signaling message may include information element(s) indicating all or part of the resources sensed by the UE-B. The first signaling message may include information element(s) indicating all or part of the resources reserved by the UE-B. The resource information included in the first signaling message may indicate a resource region randomly selected by the UE-B. The resource information included in the first signaling message may indicate a resource region (e.g. resource window) in which the UE-B performs resource sensing/selection operations. The resource information included in the first signaling message may indicate a resource region preferred by the UE-B or a resource region not preferred by the UE-B.

The first signaling message may include one or more indication information defined in Table 3 below.

**[Table 3]**

| | **First value** | **Second value** |
|---|---|---|
| Indication information #1 | request | Non-request or provision |
| Indication information #2 | Inter-UE coordination scheme 1 | Inter-UE coordination scheme 2 |
| Indication information #3 (when indication information #2 is set to a first value) | Preferred resources | Non-preferred resources |
| Indication information #3 (when indication information #2 is set to a second value) | Expected/potential resource conflict | Detected resource conflict |

The size of each of the indication information #1, indication information #2, and indication information #3 may be 1 bit. The indication information #1, indication information #2, and indication information #3 may each have a first value or a second value. Each of the first value and the second value may be 0 or 1. For example, if the first value is 0, the second value may be 1. If the first value is 1, the second value may be 0. The indication information #1 may indicate whether the first signaling message (e.g. SCI format 2-C) including the corresponding indication information #1 is an inter-UE coordination request signal. The inter-UE coordination request signal may be a signal requesting inter-UE coordination information. Alternatively, the indication information #1 may indicate whether the first signaling message (e.g. SCI format 2-C) including the corresponding indication information #1 requests inter-UE coordination information. The indication information #1 set to the first value may indicate that the first signaling message transmitted by the UE-B is an inter-UE coordination request signal. The indication information #1 set to the second value may indicate that the first signaling message transmitted by the UE-B is not an inter-UE coordination request signal. The indication information #1 may be the above-described providing/requesting indicator.

The indication information #2 may indicate use of an inter-UE coordination scheme 1 or inter-UE coordination scheme 2. The indication information #2 may be transmitted when both the inter-UE coordination scheme 1 and inter-UE coordination scheme 2 are available.
Whether to use the inter-UE coordination scheme 1 and/or inter-UE coordination scheme 2 may be configured by higher layer signaling. When only one of the inter-UE coordination scheme 1 and inter-UE coordination scheme 2 is available or when one of the inter-UE coordination scheme 1 and inter-UE coordination scheme 2 is configured to be used, the indication information #2 may not be transmitted. The inter-UE coordination scheme 1 may be used to indicate preferred resources (e.g. preferred resource set) or non-preferred resources (e.g. non-preferred resource set). The inter-UE coordination scheme 2 may be used to indicate an expected/potential resource conflict or detected resource conflict. The indication information #2 set to the first value may indicate use (or request) of the inter-UE coordination scheme 1. The indication information #2 set to the second value may indicate use (or request) of the inter-UE coordination scheme 2.

When there are multiple types of inter-UE coordination information that UE-B can request (e.g. when there are multiple resource types (e.g. resource set types) that can be indicated by inter-UE coordination information), the indication information #3 may be used to indicate a request for one inter-UE coordination information (e.g. one resource type, one resource set type). The indication information #3 may indicate inter-UE coordination information according to the inter-UE coordination scheme indicated by the indication information #2. When the indication information #2 is set to the first value, the indication information #3 set to the first value may indicate a request for preferred resources (e.g. preferred resource set), and the indication information #3 set to the second value may indicate a request for non-preferred resources (e.g. non-preferred resource set). When the indication information #2 is set to the second value, the indication information #3 set to the first value may indicate a request for expected/potential resource conflict information, and the indication information #3 set to the second value may indicate a request for detected resource conflict information. When the indication information #2 is not used, the indication information #3 may indicate a request for inter-UE coordination information (e.g. preferred resource set or non-preferred resource set) according to the inter-UE coordination scheme 1. The indication information #3 may be the resource set type described above.

The first signaling message may include information on a resource used by the UE-A for transmission of inter-UE coordination information. The first signaling message may include some indication information defined in Table 3. All or part of the indication information defined in Table 3 may be configured by higher layer signaling, MAC signaling, or PHY signaling. All or part of the indication information defined in Table 3 may be operated as fixed configuration. The use (or transmission) of each indication information defined in Table 3 may be enabled or disabled by higher layer signaling. For example, when the use of the indication information #1 and #3 is enabled by higher layer signaling, and the use of the indication information #2 is disabled by higher layer signaling, the first signaling message may include the indication information #1 and #3, and may not include the indication information #2. 'The use (or transmission) of the indication information #1 is enabled by higher layer signaling' may mean 'a request for inter-UE coordination information is explicitly indicated'. 'The use (or transmission) of the indication information #1 is disabled by higher layer signaling (e.g. the use (or transmission) of the indication information #1 is not enabled by higher layer signaling)' may mean 'a request for inter-UE coordination information is implicitly indicated'.

The indication information #1 may be indicated in an implicit manner in addition to an explicit manner. When the indication information #1 is indicated in an implicit manner, and preconfigured condition(s) are satisfied, the UE-A may transmit a second signaling message (e.g. SCI format 2- C) including inter-UE coordination information to the UE-B. For example, a new SCI format indicating a request for inter-UE coordination information may be defined, and the UE-A may determine that a request for inter-UE coordination information is indicated when the new SCI format is received from the UE-B. In this case, the UE-A may identify whether the signal (e.g. SCI format) indicates a request for inter-UE coordination information without explicit indication. The reception of the new SCI format may correspond to the preconfigured condition described above.

Alternatively, if a scrambling sequence used for SCI transmission and/or a sequence used for cyclic redundancy check (CRC) masking is generated based on a specific ID, the above-described sequence (e.g. scrambling sequence) may implicitly indicate whether the corresponding signal (e.g. SCI) is an inter-UE coordination request signal. In this case, the specific ID may be a UE-specific ID, RP-specific ID, and/or cell-specific ID. The specific ID may be configured to the UE(s) by at least one of higher layer signaling, MAC signaling, or PHY signaling. The reception of the specific ID may correspond to the preconfigured condition described above.

The base station may configure an SCI (e.g. SCI format 2-C) transmitted by the UE (e.g. UE-B) as an inter-UE coordination request signal by using at least one of higher layer signaling, MAC signaling, or PHY signaling. For example, the base station may use higher layer signaling to configure the SCI format 2-C to include a request for transmission of inter-UE coordination information. Alternatively, the base station may use at least one of higher layer signaling, MAC signaling, or PHY signaling to configure that an SCI (e.g. SCI format 2-C) transmitted by the UE not to include an inter-UE coordination request. In exemplary embodiments, configuration of indication information may be performed based on at least one of higher layer signaling, MAC signaling, or PHY signaling. The indication information may be configured (e.g., changed) statically, semi-statically, or dynamically.

When the indication information #1 is indicated in an implicit manner, the first signaling message may not include the indication information #1. Even when whether the SCI transmitted by the UE (e.g. UE-B) is an inter-UE coordination request signal is configured using at least one of higher layer signaling, MAC signaling, or PHY signaling, the first signaling message may include the indication information #1. In this case, the meaning of the indication information #1 configured by higher layer signaling, MAC signaling, and/or PHY signaling may be changed by the first signaling message.

FIG. 8 is a sequence chart illustrating a second exemplary embodiment of a sidelink communication method.

As shown in FIG. 8, a communication system may include a UE-A and UE-B, and sidelink communication may be performed based on the RA mode 2. The base station may use higher layer signaling to configure the UE(s) that an SCI (e.g., first signaling message, SCI format 2-C) transmitted by the UE-B is an inter-UE coordination request signal (S801). The UE(s) (e.g. UE-A and UE-B) may identify that an SCI transmitted by the UE-B is an inter-UE coordination request signal based on the higher layer signaling received from the base station.

Meanwhile, the configuration by higher layer signaling may be changed by a first signaling message (e.g. first-stage SCI and/or second-stage SCI). For example, the UE-B may generate a first signaling message including indication information #1 set to the second value and transmit the first signaling message to the UE-A (S802). The indication information #1 set to the second value may indicate that the first signaling message is not an inter-UE coordination request signal. The UE-A may receive the first signaling message from the UE-B and identify information elements included in the first signaling message. The UE-A may identify that the first signaling message is not an inter-UE coordination request signal based on the indication information #1 included in the first signaling message. Even when the SCI (e.g. first signaling message, SCI format 2-C) transmitted by the UE-B is configured to be an inter-UE coordination request signal by higher layer signaling, if the indication information #1 included in the first signaling received from the UE-B indicates that the first signaling message is not an inter-UE coordination request signal, the UE-A may not transmit the second signaling message. That is, the configuration by the base station's higher layer signaling may be overridden by the UE-B's first signaling message.

To support the above-described operations, the first signaling message may further include indication information indicating whether to change the configuration of the indication information #1 configured by higher layer signaling. When a scrambling sequence used for SCI transmission and/or a sequence used for CRC masking is generated based on a specific ID, and the above-described sequence (e.g. scrambling sequence) implicitly indicates whether the corresponding signal (e.g., SCI) is an inter-UE coordination request signal, the above-described sequence may be configured to change the configuration of the indication information #1 configured by higher layer signaling.

Meanwhile, when the indication information #2 is configured by at least one of higher layer signaling, MAC signaling, or PHY signaling, the first signaling message may not include the indication information #2. When the indication information #3 is configured by at least one of higher layer signaling, MAC signaling, or PHY signaling, the first signaling message may not include the indication information #3.

When each of the indication information #2 and indication information #3 is configured in a specific manner, with specific information, and/or with a specific value (e.g. when the indication information #2 and indication information #3 each indicate only one piece of information), additional indications may not be used. When the indication information #2 and indication information #3 each indicate two or more pieces of information, the size of each of the indication information #2 and indication information #3 may be 1 bit or more. When two or more pieces of information for each of the indication information #2 and indication information #3 are requested through inter-UE coordination, indicators defined in Table 4 below may be used.

**[Table 4]**

| 3-bit indicator for indication information #2 and #3 | Requested information |
|---|---|
| 000 | Preferred and Non-preferred resources |
| 001 | Preferred resources |
| 010 | Non-preferred resources |
| 011 | Expected/potential resource conflict and Detected resource conflict |
| 100 | Expected/potential resource conflict |
| 101 | Detected resource conflict |
| 110 | Preferred resources and Detected resource conflict |
| 111 | Non-preferred resources and Expected/potential resource conflict |

The size of the indicator for the indication information #2 and indication information #3 may be 3 bits. The indicator may indicate a request for at least one combination of preferred resources, non-preferred resources, expected/potential resource conflict, or detected resource conflict. The indicator set to '000' may indicate a request for information on preferred resources and non-preferred resources according to the inter-UE coordination scheme 1. The indicator set to '001' may indicate a request for information on preferred resources according to the inter-UE coordination scheme 1. The indicator set to `110' may indicate a request for preferred resource information according to the inter-UE coordination scheme 1 and detected resource conflict information according to the inter-UE coordination scheme 2. To use the indicator defined in Table 4, the UE-B may transmit a first signaling message including an information element indicating a plurality of types of resource information to the UE-A.

Meanwhile, even when each of the indication information #2 and #3 is configured based on at least one of higher layer signaling, MAC signaling, or PHY signaling, the first signaling message may include the indication information #2 and/or #3. In this case, the first signaling message may change (e.g. override) the configuration for each of the indication information #2 and #3 configured based on at least one of higher layer signaling, MAC signaling, or PHY signaling.

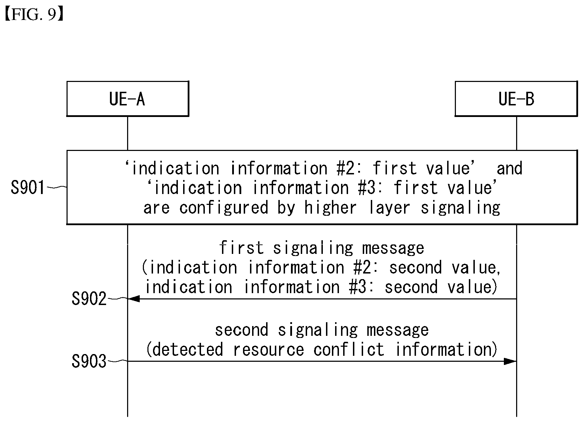

FIG. 9 is a sequence chart illustrating a third exemplary embodiment of a sidelink communication method.

As shown in FIG. 9, a communication system may include a UE-A and UE-B, and sidelink communication may be performed based on the RA mode 2. The base station may configure the indication information #2 indicating the inter-UE coordination scheme 1 (e.g. indication information #2 set to the first value) and the indication information #3 indicating a request for preferred resources (e.g. indication information #3 set to the first value) to the UE(s) by using higher layer signaling (S901). The UE(s) (e.g. UE-A and UE-B) may identify the configuration of each of the indication information #2 and indication information #3 based on the higher layer signaling received from the base station.

Meanwhile, the configuration by higher layer signaling may be changed by the first signaling message (e.g. first-stage SCI and/or second-stage SCI). For example, the UE-B may generate the first signaling message including the indication information #2 set to the second value (e.g. indication information #2 indicating the inter-UE coordination scheme 2) and the indication information #3 set to the second value (e.g. indication information #3 requesting transmission of information on a detected resource conflict), and transmit the first signaling message to the UE-A (S902). The UE-A may receive the first signaling message from the UE-B and identify the information elements included in the first signaling message.

The UE-A may identify that the first value of the indication information #2 configured by the higher layer signaling has been changed to the second value by the first signaling message. Accordingly, the UE-A may operate based on the inter-UE coordination scheme 2. The UE-A may identify that the first value of the indication information #3 configured by higher layer signaling has been changed to the second value by the first signaling message. Accordingly, the UE-A may generate the second signaling message including the detected resource conflict information and transmit the second signaling message to the UE-B (S903). The UE-B may receive the second signaling message from the UE-A and identify the detected resource conflict information included in the second signaling message.

In order to support the above-described operations, the first signaling message may further include indication information indicating whether to change the configuration of the indication information (e.g. indication information #1, #2, and/or #3) configured by the higher layer signaling.

The above-described indication scheme(s) may be configured differently for each UE. For example, each of the UEs may operate based on the indication schemes #1, #2, or #3 below.
- Indication scheme #1: The indication information (e.g. indication information #1, #2, and/or #3) may be configured by higher layer signaling, and the indication information configured by higher layer signaling may not be changed by the first signaling message.
- Indication scheme #2: The indication information (e.g. indication information #1, #2, and/or #3) may be configured by the first signaling message.
- Indication scheme #3: The indication information (e.g. indication information #1, #2, and/or #3) may be configured by higher layer signaling, and the indication information configured by higher layer signaling may be changed by the first signaling message. That is, the indication information may be configured by a combination of higher layer signaling and the first signaling message.

The indication scheme applied to the UE may be configured to the UE based on at least one of higher layer signaling, MAC signaling, or PHY signaling. The UE's inter-UE coordination scheme may be configured based on at least one of higher layer signaling, MAC signaling, or PHY signaling.

Depending on the type and/or presence or absence of resource information included in the first signaling message, the indication information #2 and/or #3 may be indicated implicitly. Tables 5 to 7 below may indicate the indication information #2 and/or #3 implied by resource information when the first signaling message includes one resource information. The one resource information may be information on resources sensed by the UE-B or information on resources reserved by the UE-B for data transmission.

**[Table 5]**

| **Type of resource information included in the first signaling message** | **Indication information #2** |
|---|---|
| Reserved resource information | Inter-UE coordination scheme 1 |
| Sensed resource information | Inter-UE coordination scheme 2 |

According to Table 5, the first signaling message including reserved resource information may indicate the inter-UE coordination scheme 1, and the first signaling message including sensed resource information may indicate the inter-UE coordination scheme 2. If transmission of the indication information #3 is required, the indication information #3 may be included in the signaling message #1. Alternatively, the indication information #3 may be configured in advance to the UE(s) by at least one of higher layer signaling, MAC signaling, or PHY signaling. [Table 6]

| **Type of resource information included in the first signaling message** | **Indication information #2 and #3** |
|---|---|
| Reserved resource information | Inter-UE coordination scheme 1 and preferred resources |
| Sensed resource information | Inter-UE coordination scheme 2 and detected resource conflict |

According to Table 6, depending on the type of resource information included in the first signaling message, the indication information #2 and #3 may be indicated implicitly. The first signaling message including reserved resource information may indicate operations according to the inter-UE coordination scheme 1 and a request for preferred resource information. The first signaling message including sensed resource information may indicate operations according to the inter-UE coordination scheme 2 and a request for detected resource conflict information.

**[Table 7]**

| **Whether resource information is included in the first signaling message, and the type of resource information included in the first signaling message** | **Indication information #2 and #3** |
|---|---|
| When resource information is not included in the first signaling message | Inter-UE coordination scheme 1 and non-preferred resources |
| Reserved resource information | Inter-UE coordination scheme 1 and preferred resources |
| Sensed resource information | Inter-UE coordination scheme 2 and detected resource conflict |

According to Table 7, depending on whether resource information is included in the first signaling message and the type of resource information included in the first signaling message, the indication information #2 and #3 may be indicated implicitly. The first signaling message that does not include resource information may indicate operations according to the inter-UE coordination scheme 1 and a request for non-preferred resource information.

**[Table 8]**

| **Whether resource information is included in the first signaling message** | **Indication information #2 and #3** |
|---|---|
| When resource information is not included in the first signaling message | 'Inter-UE coordination scheme 1' and 'preferred resources or non-preferred resources' |
| When resource information is included in the first signaling message | 'Inter-UE coordination scheme 2' and 'expected/potential resource conflict or detected resource conflict' |

According to Table 8, depending on whether resource information is included in the first signaling message, the indication information #2 (or indication information #2 and #3) may be indicated implicitly. The first signaling message that does not include resource information may indicate operations according to the inter-UE coordination scheme 1 (or, operations according to the inter-UE coordination scheme 1 and a request for preferred resource information or non-preferred resource information). The first signaling message including resource information may indicate operations according to the inter-UE coordination scheme 2 (e.g. operations according to the inter-UE coordination scheme 2 and a request for expected/potential resource conflict information or detected resource conflict information).

A request for specific inter-UE coordination information according to the inter-UE coordination scheme may be indicated by separate indication information included in the first signaling message. Alternatively, the UE-A may determine the type of inter-UE coordination information (e.g. preferred resource information, non-preferred resource information, expected/potential resource conflict information, and/or detected resource conflict information), and may transmit a second signaling message including information indicating the determined type to the UE-B. If the base station configures the UE-A to determine the type of inter-UE coordination information using higher layer signaling, the UE-A may determine the type of inter-UE coordination information. In this case, the first signaling message of the UE-B may not include an information element indicating the type of inter-UE coordination information.

Alternatively, in Table 8, the type of inter-UE coordination information according to each inter-UE coordination scheme may be specified. For example, the inter-UE coordination scheme 1 may be configured as a request for preferred resource information, and the inter-UE coordination scheme 2 may be configured as a request for detected resource conflict information. In Table 8, if the first signaling message does not include resource information, a target resource of the inter-UE coordination scheme 1 may be a resource pool (RP) configured by at least one of higher layer signaling, MAC signaling, or PHY signaling. For example, the RP may be a Tx RP allocated to the UE-B. The UE-A may determine preferred or non-preferred resources within the RP (e.g. target resource of the inter-UE coordination scheme 1).

Tables 5 to 8 may be applied to an exemplary embodiment in which the first signaling message includes one resource information. The first signaling message may include information indicating that resource information included in the first signaling message is sensed resource information or reserved resource information. That is, the first signaling message may include an indication bit indicating the type of resource information. Alternatively, the first signaling message may include a resource information field indicating sensed resources or reserved resources, and a format of the resource information field may be configured differently depending on the type of resource information. For example, the size of the resource information field may be 10 bits, the reserved resource information may be indicated using all 10 bits of the resource information field, and the sensed resource information may be indicated using some bits (e.g. 8 bits) of the resource information field. Among the 10 bits of the resource information field, the remaining bits (e.g. 2 bits) that do not indicate the sensed resource information may be set to 0. The format (e.g. configuration) of the resource information field described above may implicitly indicate the type of resource information (e.g. reserved resource information or sensed resource information). Alternatively, the information indicating the type of resource information may be transmitted through a MAC CE in the transmission procedure of the first signaling message.

**[Table 9]**

| **Whether resource information is included in the first signaling message (reserved resource information, sensed resource information)** | **Indication information #2 and #3** |
|---|---|
| (No, No) | Inter-UE coordination scheme 1 and non-preferred resources |
| (Yes, Yes) | Inter-UE coordination scheme 1 and preferred resources |
| (Yes, No) | Inter-UE coordination scheme 2 and detected resource conflict |
| (No, Yes) | Inter-UE coordination scheme 2 and expected/potential resource conflict |

The first signaling message may include two types of resource information. According to Table 9, depending on the type of resource information included in the first signaling message, the indication information #2 and #3 may be indicated implicitly. The first signaling message that does not include both reserved resource information and sensed resource information may indicate operations according to the inter-UE coordination scheme 1 and a request for non-preferred resource information. The first signaling message including both reserved resource information and sensed resource information may indicate operations according to the inter-UE coordination scheme 1 and a request for preferred resource information.

**[Table 10]**

| **Whether resource information is included in the first signaling message (reserved resource information, sensed resource information)** | **Indication information #2 and #3** |
|---|---|
| (No, No) | Non-preferred resources according to inter-UE coordination scheme 1 and expected/potential resource conflict according to inter-UE coordination scheme 2 |
| (Yes, Yes) | Preferred resources according to inter-UE coordination scheme 1 and detected resource conflict according to inter-UE coordination scheme 2 |
| (Yes, No) | Preferred resources according to inter-UE coordination scheme 1 and expected/potential resource conflict according to inter-UE coordination scheme 2 |
| (No, Yes) | Non-preferred resources according to inter-UE coordination scheme 1 and detected resource conflict according to inter-UE coordination scheme 2 |

The first signaling message may include two types of resource information. According to Table 10, depending on the type of resource information included in the first signaling message, the indication information #2 and #3 may be indicated implicitly. The exemplary embodiment of Table 10 may indicate a request for information according to different inter-UE coordination schemes. The first signaling message that does not include both reserved resource information and sensed resource information may indicate a request for non-preferred resource information according to the inter-UE coordination scheme 1 and expected/potential resource conflict information according to the inter-UE coordination scheme 2. The first signaling message including both reserved resource information and sensed resource information may indicate a request for preferred resource information according to the inter-UE coordination scheme 1 and detected resource conflict information according to the inter-UE coordination scheme 2.

**[Table 11]**

| **Whether resource information is included in the first signaling message (reserved resource information, sensed resource information)** | **Configuration of second signaling for first resources** | **Configuration of second signaling for second resources** |
|---|---|---|
| (No, No) | Inter-UE coordination scheme 1 | Inter-UE coordination scheme 1 |
| (Yes, Yes) | Inter-UE coordination scheme 2 | Inter-UE coordination scheme 2 |
| (Yes, No) | Inter-UE coordination scheme 2 | Inter-UE coordination scheme 1 |
| (No, Yes) | Inter-UE coordination scheme 1 | Inter-UE coordination scheme 2 |

The first signaling message may include two types of resource information (e.g. first resource information and second resource information). According to Table 11, depending on whether or not resource information is included in the first signaling message, the indication information #2 for each resource may be implicitly indicated. The first signaling message that does not include the first resource information may indicate operations according to the inter-UE coordination scheme 1 for the first resources, and the first signaling message that includes the first resource information may indicate operations according to the inter-UE coordination scheme 1 for the first resources. The first signaling message that does not include the second resource information may indicate operations according to the inter-UE coordination scheme 1 for the second resources, and the first signaling message that includes the second resource information may indicate operations according to the inter-UE coordination scheme 1 for the second resources.

When the inter-UE coordination scheme 1 is used, a request for preferred resource information or non-preferred resource information may be indicated. When the inter-UE coordination scheme 2 is used, a request for expected/potential resource conflict information or detected resource conflict information may be indicated. A request for specific inter-UE coordination information according to the inter-UE coordination scheme may be indicated by separate indication information included in the first signaling message. Alternatively, the UE-A may determine the type of inter-UE coordination information (e.g. preferred resource information, non-preferred resource information, expected/potential resource conflict information, and/or detected resource conflict information), and transmit a second signaling message including information indicating the determined type to the UE-B.

Alternatively, the type of inter-UE coordination information according to each inter-UE coordination scheme may be specified in Table 11. For example, the inter-UE coordination scheme 1 may be configured as a request for preferred resource information, and the inter-UE coordination scheme 2 may be configured as a request for detected resource conflict information. In Table 11, when the first signaling message does not include resource information, a target resource of the inter-UE coordination scheme 1 may be an RP configured by at least one of higher layer signaling, MAC signaling, or PHY signaling. For example, the RP may be the Tx RP allocated to the UE-B.

Among the above-mentioned Tables 5 to 11, at least one table may be configured to the UE(s) by at least one of higher layer signaling, MAC signaling, or PHY signaling. When the UE-B requests a plurality of information elements, the UE-A may transmit a second signaling message including a plurality of information elements to the UE-B. Alternatively, the UE-A may select an available information element from among a plurality of information elements and transmit the second signaling message including the selected information element to the UE-B. In this case, the second signaling message may include information indicating which information element is provided among the plurality of information elements requested by the first signaling message. Information bits indicating the provided information element may be included in the second signaling message. Alternatively, a format of a specific field included in the second signaling message may be configured differently for each provided information element (e.g. requested information). In this case, the information element provided by the second signaling message may be implicitly indicated by the format of the specific field. Alternatively, the information indicating the provided information element may be transmitted through a MAC CE in the transmission procedure of the second signaling message.

In exemplary embodiments, the first signaling message may include the indication information #1 and the indication information #2. Alternatively, the first signaling message may implicitly indicate the indication information #1 and the indication information #2. The UE-A may determine inter-UE coordination information to be provided for each inter-UE coordination scheme. For example, the UE-A may determine preferred resource information or non-preferred resource information for the inter-UE coordination scheme 1. The UE-A may determine expected/potential resource conflict information or detected resource conflict information for the inter-UE coordination scheme 2. The UE-A may transmit the second signaling message including information indicating the determined information. For example, if the first signaling message indicates the inter-UE coordination scheme 1, the UE-A may transmit the second signaling message including preferred resource information or non-preferred resource information to the UE-B. Alternatively, the UE-A may transmit the second signaling message including preferred resource information and non-preferred resource information to the UE-B.

The second signaling message may include information bits indicating the type of resource information. Alternatively, a format of a specific field included in the second signaling message may be configured differently for each resource information. In this case, the format of the specific field may implicitly indicate the type of resource information included in the second signaling message. The information indicating the type of resource information may be transmitted through a MAC CE in the transmission procedure of the second signaling message. The information indicating the type of resource information may be transmitted on a sequence basis by using a PSFCH.

In exemplary embodiments, the first signaling message may include the indication information #1. Alternatively, the first signaling message may implicitly indicate the indication information #1. The UE-A may determine inter-UE coordination information to be provided for each inter-UE coordination scheme. For example, the UE-A may determine preferred resource information or non-preferred resource information for the inter-UE coordination scheme 1. The UE-A may determine expected/potential resource conflict information or detected resource conflict information for the inter-UE coordination scheme 2. The UE-A may transmit the second signaling message including information indicating the determined information.

The second signaling message may include information bits indicating the type of resource information. Alternatively, a format of a specific field included in the second signaling message may be configured differently for each resource information. In this case, the format of the specific field may implicitly indicate the type of resource information included in the second signaling message. The information indicating the type of resource information may be transmitted through a MAC CE in the transmission procedure of the second signaling message. The information indicating the type of resource information may be transmitted on a sequence basis by using a PSFCH.

Depending on the inter-UE coordination scheme, a physical layer channel through which the second signaling message is transmitted may be configured differently. In this case, the physical layer channel through which the second signaling message is transmitted may implicitly indicate the inter-UE coordination scheme associated with the second signaling message. For example, when the inter-UE coordination scheme 1 is used, the UE-A may transmit the second signaling message to the UE-B by using a PSCCH and/or PSSCH. When the inter-UE coordination scheme 2 is used, the UE-A may transmit the second signaling message to the UE-B by using a PSFCH. The information included in the second signaling message may indicate the type of inter-UE coordination information (e.g. preferred resource information, non-preferred resource information, expected/potential resource conflict information, detected resource conflict information).

The exemplary embodiments of the present disclosure may be implemented as program instructions executable by a variety of computers and recorded on a computer readable medium. The computer readable medium may include a program instruction, a data file, a data structure, or a combination thereof. The program instructions recorded on the computer readable medium may be designed and configured specifically for the present disclosure or can be publicly known and available to those who are skilled in the field of computer software.

Examples of the computer readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions and alterations may be made herein without departing from the scope of the present disclosure.

## Claims

1. A method of a first user equipment (UE), comprising:
generating first sidelink control information (SCI) including a first information element requesting inter-UE coordination information and a second information element indicating a type of resource information included in the inter-UE coordination information;
transmitting the first SCI to a second UE; and
receiving second SCI including the inter-UE coordination information from the second UE.

2. The method according to claim 1, wherein when a request for the inter-UE coordination information is enabled by higher layer signaling, the first SCI including the first information element and the second information element is transmitted.

3. The method according to claim 1, wherein the type indicates preferred resources or non-preferred resources, and the inter-UE coordination information of the second SCI includes preferred resource information or non-preferred resource information corresponding to the type.

4. The method according to claim 1, wherein the first SCI further includes time resource information, and preferred resources or non-preferred resources indicated by the inter-UE coordination information of the second SCI are determined within a time resource indicated by the time resource information.

5. The method according to claim 1, wherein the first SCI further includes frequency resource information, and preferred resources or non-preferred resources indicated by the inter-UE coordination information of the second SCI are determined within a frequency resource indicated by the frequency resource information.

6. The method according to claim 1, wherein preferred resources or non-preferred resources indicated by the inter-UE coordination information of the second SCI are determined within a resource pool.

7. The method according to claim 1, wherein the first SCI is configured by higher layer signaling to include the first information element requesting the inter-UE coordination information.

8. The method according to claim 1, wherein each of the first SCI and the second SCI is an SCI format 2-C.

9. A method of a second user equipment (UE), comprising:
receiving, from a first UE, first sidelink control information (SCI) including a first information element requesting inter-UE coordination information and a second information element indicating a type of resource information included in the inter-UE coordination information;
determining the resource information corresponding to the type based on the request of the first information element; and
transmitting second SCI including the inter-UE coordination information including the resource information to the second UE.

10. The method according to claim 9, wherein when a request for the inter-UE coordination information is enabled by higher layer signaling, the first SCI including the first information element and the second information element is received from the first UE.

11. The method according to claim 9, wherein the type indicates preferred resources or non-preferred resources, and the resource information included in the inter-UE coordination information of the second SCI is preferred resource information or non-preferred resource information.

12. The method according to claim 9, wherein the first SCI further includes time resource information, and preferred resources or non-preferred resources indicated by the resource information included in the inter-UE coordination information of the second SCI are determined within a time resource indicated by the time resource information.

13. The method according to claim 9, wherein the first SCI further includes frequency resource information, and preferred resources or non-preferred resources indicated by the inter-UE coordination information of the second SCI are determined within a frequency resource indicated by the frequency resource information.

14. The method according to claim 9, wherein preferred resources or non-preferred resources indicated by the inter-UE coordination information of the second SCI are determined within a resource pool.

15. The method according to claim 9, wherein the first SCI is configured by higher layer signaling to include the first information element requesting the inter-UE coordination information.

16. A first user equipment (UE) comprising:
a processor; and
a memory storing one or more instructions executable by the processor,
wherein the one or more instructions are executed to perform:
generating first sidelink control information (SCI) including a first information element requesting inter-UE coordination information and a second information element indicating a type of resource information included in the inter-UE coordination information;
transmitting the first SCI to a second UE; and
receiving second SCI including the inter-UE coordination information from the second UE.

17. The first UE according to claim 16, wherein when a request for the inter-UE coordination information is enabled by higher layer signaling, the first SCI including the first information element and the second information element is transmitted.

18. The first UE according to claim 16, wherein the type indicates preferred resources or non-preferred resources, and the inter-UE coordination information of the second SCI includes preferred resource information or non-preferred resource information corresponding to the type.

19. The first UE according to claim 16, wherein the first SCI further includes time resource information, and preferred resources or non-preferred resources indicated by the inter-UE coordination information of the second SCI are determined within a time resource indicated by the time resource information.

20. The first UE according to claim 16, wherein the first SCI further includes frequency resource information, and preferred resources or non-preferred resources indicated by the inter-UE coordination information of the second SCI are determined within a frequency resource indicated by the frequency resource information.
